**Europäisches Patentamt**

**European Patent Office**

**Office européen des brevets**

(19)

(11) Veröffentlichungsnummer: **0 309 900 B1**

# EUROPÄISCHE PATENTSCHRIFT

(12)

(45) Veröffentlichungstag der Patentschrift:
**11.09.91 Patentblatt 91/37**

(51) Int. Cl.⁵ : **H02M 3/335**

(21) Anmeldenummer: **88115548.5**

(22) Anmeldetag : **22.09.88**

(54) **Schaltnetzteil.**

Verbunden mit 88908213.7/0386020
(europäische
Anmeldenummer/Veröffentlichungsnummer)
durch Entscheidung vom 19.12.90.

(30) Priorität : **30.09.87 DE 3733456**

(43) Veröffentlichungstag der Anmeldung :
**05.04.89 Patentblatt 89/14**

(45) Bekanntmachung des Hinweises auf die
Patenterteilung :
**11.09.91 Patentblatt 91/37**

(84) Benannte Vertragsstaaten :
**AT BE CH DE ES FR GB GR IT LI LU NL SE**

(56) Entgegenhaltungen :
**EP-A- 0 033 678**
**EP-A- 0 090 085**
**EP-A- 0 211 300**
**DE-A- 2 910 593**

(73) Patentinhaber : **Deutsche Thomson-Brandt
GmbH
Hermann-Schwer-Strasse 3 Postfach 1307
W-7730 Villingen-Schwenningen (DE)**

(72) Erfinder : **Rilly, Gerard, Dr.
Panoramaweg 6
W-7731 Unterkirnach (DE)**
Erfinder : **Lopez, Daniel
Forststrasse 27
W-7744 Königsfeld/Neuhausen (DE)**

(74) Vertreter : **Körner, Peter, Dipl.-Ing.
Deutsche Thomson-Brandt GmbH Patent- und
Lizenzabteilung Göttinger Chaussee 76
W-3000 Hannover 91 (DE)**

EP 0 309 900 B1

Jouve, 18, rue Saint-Denis, 75001 PARIS

## Beschreibung

Die Erfindung betrifft ein Schaltnetzteil, insbesondere zur Stromversorgung von Monitoren, Fernsehempfängern und Videorecordern.

Bei einem Schaltnetzteil ist es bekannt (DE-PS 2910593), den Basisstrom für den Schalttransistor auf der Primärseite während der leitenden Phase dieses Transistors in Abhängigkeit von dem Kollektorstrom des Transistors derart zu steuern, daß der Basisstrom etwa proportional mit dem Kollektorstrom zunimmt. Durch eine solche Kollektorstrom-proportionale Änderung des Basisstromes werden ein besseres Schaltverhalten des Schalttransistors und eine geringere Verlustleistung an diesem Transistor erreicht. Der Basisstrom wird dabei mit einem Stromübertrager aus dem Kollektorstrom abgeleitet, der den Kollektorstrom in den wesentlich geringeren Basisstrom übersetzt.

Es ist bei Schaltnetzteilen auch bekannt, eine sekundärseitig erzeugte Impulsspannung auf die Primärseite des Schaltnetzteils zu übertragen. Der Impuls kann z.B. ein Synchronisierimpuls sein, der auf der Sekundärseite erzeugt wird und auf der Primärseite die periodische Sperrung des Schalttransistors auslöst oder synchronisiert. Dafür ist ein als reiner Informationsübertrager dienender Übertrager notwendig, um die notwendige galvanische Trennung zwischen der Sekundärseite und der Primärseite einzuhalten.

Ein Schaltnetzteil mit den beschriebenen Merkmalen benötigt also einen ersten Übertrager, der vom Kollektorstrom des Schalttransistors angesteuert wird und als Strom- oder Leistungsübertrager arbeitet, und einen zweiten Übertrager, der als Informationsübertrager arbeitet und im wesentlichen die Information für eine Zeitreferenz überträgt.

Der Erfindung liegt die Aufgabe zugrunde, den Gesamtaufwand für diese beiden, verschiedene Funktionen ausübenden Übertrager zu verringern.

Diese Aufgabe wird durch die im Anspruch 1 beschriebene Erfindung gelöst. Vorteilhafte Weiterbildungen der Erfindung sind in den Unteransprüchen beschrieben.

Durch die erfindungsgemäße Lösung werden somit zwei Übertrager mit insgesamt vier Wicklungen durch nur einen Übertrager mit drei Wicklungen ersetzt, wodurch eine beträchtliche Kostenersparnis entsteht. Insgesamt sind dann nur ein Übertrager, ein Kern, ein Spulenträger und drei Wicklungen erforderlich gegenüber der bekannten Lösung mit zwei Übertragern, zwei Kernen, zwei Spulenträgern und vier Wicklungen.

Die Erfindung beruht auf folgender Erkenntnis : An sich scheint die Zusammenfassung der beiden Übertrager zu einem Übertrager nicht möglich, weil diese einerseits als Stromübertrager und andererseits als Informationsübertrager grundsätzlich verschieden arbeiten und auch unterschiedliche Signale übertragen müssen. Im vorliegenden Fall ist die Zusammenfassung zu einem Übertrager jedoch möglich. Das beruht insbesondere darauf, daß die Stromübertragung einerseits und die Informationsübertragung andererseits nicht gleichzeitig, sondern zeitlich nacheinander erfolgen. Während der Stromübertragung, also der leitenden Phase des Schalttransistors, erfolgt keine Übertragung eines Impulses. Während der Übertragung des Impulses andererseits ist der Schalttransistor gesperrt, der Kollektorstrom und der Basisstrom also null, und eine Stromtransformation erfolgt während dieser Zeit nicht. Deshalb kann während dieser Zeit der Impuls ohne Störung übertragen werden. Durch diese Ausnutzung der zeitsequentiellen Arbeitsweise des Stromübertragers und des Informationsübertragers ist es also möglich, den als Energieübertrager wirkenden Stromübertrager und den als reiner Informationsübertrager wirkenden Übertrager für den Impuls zu einem Übertrager zusammenzufassen. Die Erfindung ist insbesondere bei Schaltnetzteilen vorteilhaft, die bei hohen Leistungen, mit unterschiedlichen Eingangsspannungen und unterschiedlichen Frequenzen arbeiten.

Die Erfindung wird im folgenden anhand der Zeichnung an einem Ausführungsbeispiel erläutert. Darin zeigen

Fig. 1    ein Ausführungsbeispiel für das erfindungsgemäße Schaltnetzteil,
Fig. 2    den Aufbau des Fig. 1 verwendeten Übertrager,
Fig. 3    Kurven zur Erläuterung der sequentiellen Wirkungsweise,
Fig. 4    eine Ausbildung des Transformators mit einer zusätzlichen, vierten Wicklung,
Fig. 5    Kurven zur Erläuterung der Wirkungsweise eines Zeitfensters und
Fig. 6    Kurven zur Erläuterung der Funktion von Fig. 1.

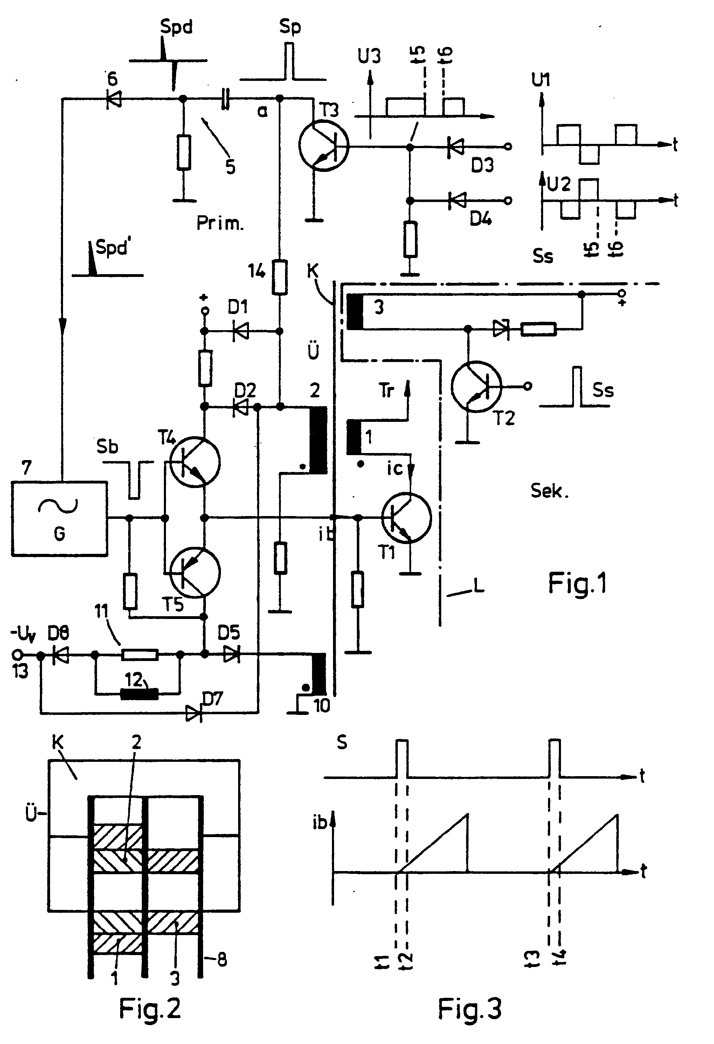

Fig. 1 zeigt ein Schaltnetzteil mit dem primärseitigen Schalttransistor T1, dessen Kollektor über die Wicklung 1 des Übertragers Ü an die Arbeitswicklung des nicht dargestellten Leistungstransformators Tr angeschlossen ist, der auf seiner Sekundärseite über Gleichrichterschaltungen die Betriebsspannungen erzeugt. Bei einem derartigen Schaltnetzteil soll einerseits aus dem Kollektorstrom ic ein diesem porportionaler Basisstrom abgeleitet und außerdem ein Synchronisierimpuls Ss von der Sekundärseite Sek. zur Primärseite Prim. übertragen werden. Die galvanische Trennung zwischen der Sekundärseite Sek. und der Primärseite Prim. ist durch die strichpunktierte Linie L dargestellt. Für die Übertragung der beiden genannten Größen, nämlich einerseits des Basisstromes und andererseits des Synchronisierimpulses, ist der gemeinsame Übertrager Ü mit drei Wicklungen 1, 2, 3 vorgesehen. Die Übertragung dieser beiden Größen wird im folgenden nacheinander beschrieben.

Stromübertragung

Der während der leitenden Phase von T1 fließende Kollektorstrom ic fließt durch die Wicklung 1 und wird auf die Wicklung 2 transformiert. Die Wicklung 2 liefert daraufhin einen entsprechend heruntertransformierten Basisstrom ib geringerer Größe, der über die leitende Diode D2 auf die beiden Transistoren T4, T5 gelangt, derern Verbindungspunkt den Basisstrom ib für den Schalttransistor T1 liefert. Der von der Wicklung 2 erzeugte, dem Kollektorstrom ic proportionale Basisstrom ib steuert den Transistor T1 leitend. Die Übertragung des Synchronisierimpulses Ss erfolgt während dieser Zeit nicht, so daß ib von dem Synchronisierimpuls auch nicht beeinträchtigt werden kann. Die Diode D1 dient zur Begrenzung der Spannung an der Wicklung 2 während der Sperrung von T1.

Übertragung des Synchronisierimpulses

Der auf der Sekundärseite Sek. erzeugte Synchronisierimpuls Ss steuert den Transistor T2 leitend, der daraufhin das untere Ende der Wicklung 3 mit Erde verbindet und an der Wicklung 3 einen Impuls mit der Größe der Betriebsspannung erzeugt. Dieser Impuls erzeugt in der Wicklung 2 einen entsprechenden primärseitigen Synchronisierimpuls Sp, der über den Widerstand 14 auf den Kollektor des Transistors T3 gelangt. Der Transistor T3 bildet ein ein Zeitfenster darstellendes Tor. Er ist an seiner Basis durch die von Tr abgeleiteten Gegentakt-Spannungen U1 und U2 über die Dioden D3, D4 angesteuert. Die Dioden D3, D4 wirken als ODER-Schaltung, so daß sich an der Basis zwischen t5 und t6 eine Spannung ergibt, die T3 sperrt und somit die Ausbildung des Impulses Sp am Kollektor ermöglicht. Während der übrigen Zeit ist der Punkt a zur Ausschaltung von Störsignalen durch T3 kurzgeschlossen. Der Synchronisierimpuls Sp wird mit dem RC-Differenzierglied 5 in den differenzierten Impuls Spd umgewandelt. Davon werden mit der Diode 6 die positiven Impulse ausgewertet, die als Impuls Spd' auf die Steuerschaltung 7 gelangen. Dort erzeugen sie den Steuerimpuls Sb für die Sperrung von T1. Der Impuls Sb steuert T5 leitend, so daß die Basis von T1 geerdet und T1 gesperrt wird. Während der Dauer der dargestellten Impulse S ist somit ic gleich null und ib gleich null, so daß die Übertragung des Synchronisierimpulses durch den Basisstrom nicht beeinflußt werden kann.

Für den Stromübertrager wirkt also die Wicklung 1 als Primärwicklung und die Wicklung 2 als Sekundärwicklung und für die Übertragung des Synchronisierimpulses die Wicklung 3 als Primärwicklung und die Wicklung 2 ebenfalls als Sekundärwicklung. Durch diese Doppelfunktion der Wicklung 2 werden also die bislang benötigte vierte Wicklung, nämlich die getrennte Sekundärwicklung für S, eingespart und alle Funktionen der bisher benötigten zwei Übertrager in einem Übertrager zusammengefaßt.

Die Schaltung mit der weiteren Wicklung 10, dem Widerstand 11, den Dioden D8, D7 und der Induktivität 12 dient zur zusätzlichen Steuerung des Basisstromes ib im Sinne einer Verbesserung der Sperrung des Transistors T1, d.h. der Abschaltung des Kollektorstromes ic. Die Wicklung 10 ist so gepolt, daß die in ihr erzeugte Spannung einen negativen Basisstrom ib für die Sperrung von T1 erzeugt, dessen Amplitude in vorteilhafter Weise proportional zum Spitzenwert des Kollektorstromes ic ist. Durch diese Belastung des Transformators wird ein besserer Schutz für den Transistor T1 erzeugt. Die Dioden D5, D8 ermöglichen es, daß der Fußpunkt der Schaltung, also der Kollektor von T5, für die gewünschte Wirkungsweise nicht negativ werden kann. Die Diode D7 hat den Zweck, daß die an die Klemme 13 angelegte negative Vorspannung -Uv durch die Schaltung aufgeladen werden kann. Die Schaltung gemäß Fig. 1 wirkt dabei als eine Quelle mit gespeicherter Energie.

Fig. 2 zeigt den Aufbau des Übertragers Ü mit dem Kern K und den drei Wicklungen 1, 2, 3. Die aus Kunststoff bestehenden Trennwände 8 bewirken die notwendige Isolierung zwischen der Wicklung 3 auf der Sekundärseite und den Wicklungen 1, 2 auf der Primärseite sowie die Isolierung dieser Wicklungen zum Kern K.

Fig. 3 zeigt, daß der Synchronisierimpuls S einerseits und der Basisstrom ib andererseits niemals gleichzeitig, sondern zeitlich nacheinander auftreten. Von t1 bis t2 erfolgt die Übertragung des Synchronisierimpulses S. Von t2 bis t3 erfolgt die Erzeugung des vom Kollektorstrom abhängigen Basisstromes ib, während der Synchronisierimpuls S nicht vorhanden ist.

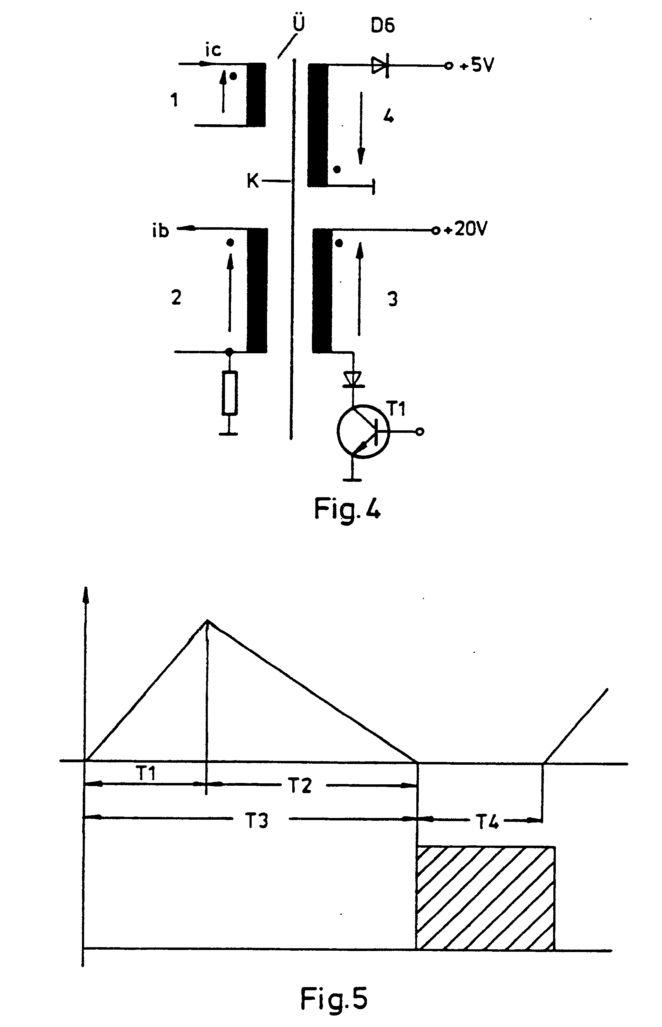

Fig. 4 zeigt ein Ausführungsbeispiel, bei dem zusätzlich zu den Wicklungen 1, 2, 3 von Fig. 1 noch eine vierte Wicklung 4 vorgesehen ist. Die Wicklung 4 ist über eine Diode D6 an eine Betriebsspannung von + 5V angeschlossen und dient dazu, die Entmagnetisierung des Kerns K zu gewährleisten. Beim Abschalten der Ströme in den Wicklungen 1, 2, 3 findet der sogenannte Magnetisierungsstrom einen freien Weg zur Entladung über die Wicklung 4, die, wie durch die Punkte angedeutet, gegenphasig zu den Wicklungen 1, 2, 3 geschaltet

3

ist. Dadurch ergibt sich der Vorteil, daß die in Fig. 1 dargestellten Dioden; D1, D2 nicht mehr notwendig sind und eine Leistungsersparnis erzielt wird.

Fig. 5 zeigt Kurven zur Erläuterung der Wikungsweise des bereits genannten Zeitfensters. Während der Zeit T1 erfolgt die Ladung der Primärwicklung 1 des Übertragers Ü. Während der Zeit T2 erfolgt die Entladung des Übertragers Ü über die verschiedenen Sekundärwicklungen 2,3 und gegebenenfalls 4. Wähend der Zeit $T3 = T1 + T2$ erfolgt keine Übertragung eines Synchronsignals. Das Zeitfenster ist also so gesteuert, daß während dieser Zeit ein Synchronimpuls nicht durchgelassen wird. Während der Zeit T4 ist im Sinne eines Zeitfensters die Schaltung in der Lage, einen möglichen Synchronimpuls S durchzulassen. Wenn dieser Synchronimpuls S nicht erscheint, wird die Umsteuerung des Transistors T1, also der erneute Stromfluß, durch die Eigenfrequenz der Schaltung eingeleitet. Das in Fig. 5 erläuterte Zeitfenster wird in Fig. 1 durch den Transistor T3 gebildet.

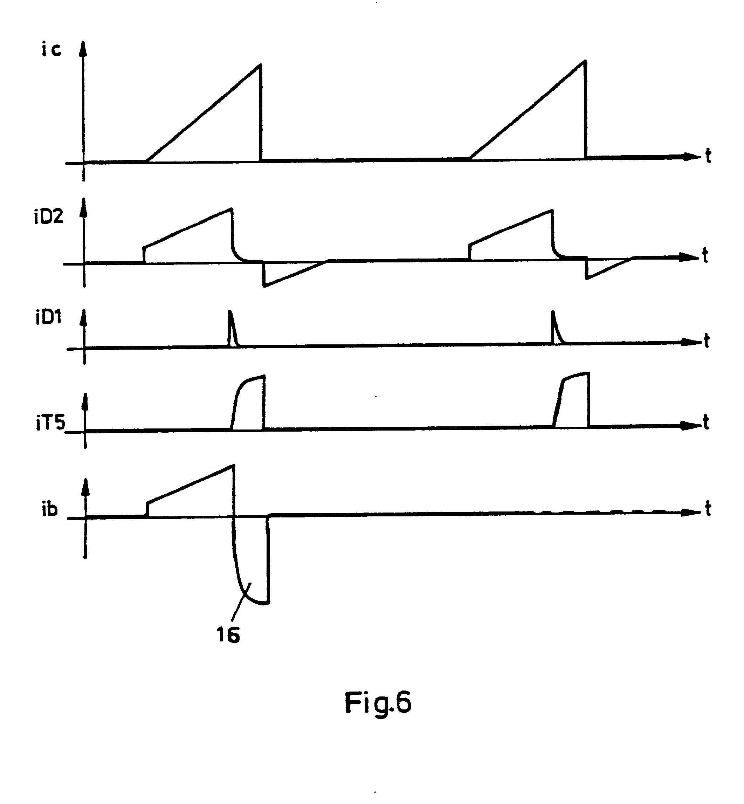

Fig. 6 zeigt Ströme in der Schaltung nach Fig. 1. Dargestellt sind der Kollektorstrom ic durch T1, der Strom iD2 durch die Diode D2, der Strom iD1 durch die Diode D1, der Strom iT5 durch den als Treiber wirkenden Transistor T5 und der Basisstrom ib zur Steuerung des Transistor T1. Durch die beschriebene Schaltung mit den Bauteilen 10, 11, 12, D5, D7, D8 wird für die Sperrung von T1 der Strom iT5 erzeugt, der entsprechend der Stromverstärkung von T5 den negativen Impuls 16 in dem Basisstrom ib erzeugt. Die negative Spitze 16 im Basisstrom ib bewirkt die genannte Verbesserung in der Sperrung von T1. Da diese Spitze von der Wicklung 10 erzeugt wird, ist die Amplitude der Spitze 16 von ib in erwünschter Weise proportional zum Kollektorstrom ic.

## Patentansprüche

1. Schaltnetzteil mit einem Leistungsübertrager (Tr) und einem Schalttransistor (T1) Übertragung der Energie und mit einer zusätzlichen Übertrageranordnung mit einem ersten Übertrager zur Ableitung eines Basisstromes (ib) aus dem Kollektorstrom (ic) des Schalttransistors (T1) und einem zweiten Übertrager zur Übertragung eines Synchronisierimpulses (S) von der Sekundärseite zur Primärseite des Leistungstransformators (Tr), **dadurch gekennzeichnet**, daß beide Übertrager durch einen Übertrager (Ü) mit wenigstens drei Wicklungen (1, 2, 3) gebildet sind, von denen die erste (1) im Weg des Kollektorstroms (ic) liegt, die zweite (2) den Basisstrom (ib) und den primärseitigen Synchronisierimpuls (Sp) für die Basis des Schalttransistors (T1) liefert und die dritte (3) mit dem Synchronisierimpuls (Ss) von der Sekundärseite des Leistungsübertragers (Tr) gespeist ist.

2. Netzteil nach Anspruch 1, **dadurch gekennzeichnet**, daß der Synchronisierimpuls (S) ein die periodische Sperrung des Schalttransistors (T1) steuernder Synchronisierimpuls ist.

3. Netzteil nach Anspruch 1, **dadurch gekennzeichnet**, daß im Weg des Synchronisierimpulses (Sp) auf der Primärseite des Leistungsübertragers (Tr) ein als Zeitfenster dienendes Tor (T3) liegt, das nur während der Dauer des Impulses (Sp) durchlässig ist.

4. Netzteil nach Anspruch 1, **dadurch gekennzeichnet**, daß der Übertrager eine vierte Wicklung (4) zur Entmagnetisierung des Kerns (K) der Übertrageranordnung (Ü) aufweist (Fig. 4).

5. Netzteil nach Anspruch 4, **dadurch gekennzeichnet**, daß die vierte Wicklung (4) über eine Diode (D6) an eine Betriebsspannung angeschlossen ist (Fig. 4).

## Claims

1. A switched-mode power supply with a power transformer and a switching transistor (T1) for transforming the energy and with an additional transformer arrangement having a first transformer for deriving a base current (ib) from the collector current (ic) of the switching transistor (T1) and a second transformer for transmitting a synchronising pulse (S) from the secondary side to the primary side of the power transformer (Tr), **characterised in that** both transformers are formed by a transformer (UE) having at least three windings (1, 2, 3), the first (1) of which is in the path of the collector current (ic), the second (2) of which delivers the base current (ib) and the primary -side synchronising pulse (Sp) for the base of the switching transistor (T1) and the third (3) of which is fed with the synchronising pulse (Ss) from the secondary side of the power transformer (Tr).

2. A power supply according to claim 1, **characterised in that** the synchronising pulse (S) is a synchronising pulse controlling the periodic blocking of the switching transistor (T1).

3. A power supply according to claim 1, **characterised in that** a gate (T3) serving as a time window lies in the path of the synchronising pulse (Sp) on the primary side of the power transformer (Tr), said gate only being open for the duration of the pulse (Sp).

4. A power supply according to claim 1, **characterised in that** the transformer has a fourth winding (4) for demagnetising the core (K) of the transformer arrangement (UE), (Fig.4).

5. A power supply according to claim 4, **characterised in that** the fourth winding (4) is connected via a diode (D6) to an operating voltage (Fig.4).

## Revendications

1. Bloc d'alimentation et de commutation avec un transformateur de puissance (Tr) et un transistor de commutation (T1) pour la transformation d'énergie et avec un dispositif supplémentaire de transformation avec un premier transformateur pour dériver un courant de base (ib) du courant collecteur (ic) du transistor de commutation (T1) et un second transformateur pour transmettre une impulsion de synchronisation (S) du secondaire au primaire du transformateur de puissance (Tr), **caractérisé en ce que** les deux transformateurs sont formés par un transformateur (Ü) avec au moins trois enroulements (1, 2, 3) dont le premier (1) est situé dans le parcours du courant collecteur (ic), dont le second (2) fournit le courant de base (ib) et l'impulsion de synchronisation (Sp) située du côté du primaire pour la base du transistor de commutation (T1) et dont le troisième (3) est alimenté avec l'impulsion de synchronisation (Ss) du secondaire du transformateur de puissance (Tr).

2. Bloc d'alimentation selon la revendication 1, **caractérisé en ce que** l'impulsion de synchronisation (S) est une impulsion de synchronisation qui commande le blocage périodique du transistor de commutation (T1).

3. Bloc d'alimentation selon la revendication 1, **caractérisé en ce qu'**une porte (T3) qui sert de fenêtre de temps se trouve dans le parcours de l'impulsion de synchronisation (Sp) sur le primaire du transformateur de puissance (Tr), porte qui ne peut être passée que pendant la durée de l'impulsion.

4. Bloc d'alimentation selon la revendication 1, **caractérisé en ce que** le transformateur présente un quatrième enroulement (4) pour la démagnétisation du noyau (K) du dispositif de transformation (Ü) (fig. 4).

5. Bloc d'alimentation selon la revendication 4, **caractérisé en ce que** le quatrième enroulement (4) est branché à une tension de secteur par une diode (D6) (fig. 4).

Fig.1

Fig.2

Fig.3

Fig.4

Fig.5

**Fig.6**